# EUROPEAN PATENT APPLICATION

(11) **EP 4 815 459 A1**
(43) Date of publication of application: **30.09.2026**
(21) Application number: 25305422.5
(22) Date of filing: 25.03.2025
(51) Int. Cl.: H04N 19/70, H04N 21/235, H04N 21/435, H04N 21/81, H04N 21/84

(54) **SILENT PACKAGES ANIMATION BITSTREAM FORMAT AND COMPRESSION FOR AVATAR REPRESENTATION FORMAT**

(71) Applicant: InterDigital CE Patent Holdings, SAS, 75017 Paris (FR)
(72) Inventor: COVA REGATEIRO, João Pedro, 35220 CHATEAUBOURG (FR); HAMZA, Ahmed, COQUITLAM, V3J 3X5 (CA); GALVANE, Quentin, 35235 THORIGNE-FOUILLARD (FR); GOSSELIN, Philippe Henri, 35340 LIFFRE (FR)
(74) Representative: Vossius & Partner Patentanwälte Rechtsanwälte mbB

(57) **Abstract**

A method, in a receiver, is disclosed. An avatar animation bitstream is received from a transmitter. The avatar animation bitstream comprises at least one avatar animation unit (AAU). A header of the at least one avatar animation unit (AAU) is decoded. It is then determined from the header that the AAU is a silent AAU, a silent AAU indicating to the receiver that the transmitter is not sending any animation data. Responsive to the determining, a first syntax element indicating a number of ticks per second and a second syntax element indicating a duration of the silent AAU are decoded. A target avatar is rendered taking into account the first and second syntax elements.

## Description

### BACKGROUND

The present application is related to the encoding and decoding of avatar animation data.

### BRIEF SUMMARY

Briefly stated, in one embodiment, a method, in a receiver, is disclosed. An avatar animation bitstream is received from a transmitter. The avatar animation bitstream comprises at least one avatar animation unit (AAU). A header of the at least one avatar animation unit (AAU) is decoded. It is then determined from the header that the AAU is a silent AAU, a silent AAU indicating to the receiver that the transmitter is not sending any animation data. Responsive to the determining, a first syntax element indicating a number of ticks per second and a second syntax element indicating a duration of the silent AAU are decoded. A target avatar is rendered taking into account the first and second syntax elements.

In another embodiment, a method, in a transmitter, is disclosed. It is determined that the transmitter is not sending any animation data to a receiver. In a header of an avatar animation unit (AAU) information is encoded that indicates that the AAU is a silent AAU.

A first syntax element indicating a number of ticks per second and a second syntax element indicating a duration of the silent AAU are then coded in a payload of the AAU. The avatar animation bitstream comprising the AAU is then transmitted to the receiver.

Corresponding apparatuses are also disclosed.

In one embodiment, a signal is disclosed that comprises a header of an avatar animation unit comprising information indicating that the AAU is a silent AAU and a payload comprising a first syntax element indicating a number of ticks per second and a second syntax element indicating a duration of the silent AAU, wherein the silent AAU indicates to a receiver of the signal that a transmitter of the signal is not sending any animation data.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:
FIG. 1 illustrates a binary structure using keyframe and non-keyframe AAUs according to one or more embodiments of the present disclosure;
FIG.2 is a block diagram illustrating an example of a method for decoding avatar parameters according to one or more embodiments of the present disclosure;
FIG. 3 is a block diagram illustrating an example of a method for encoding avatar parameters according to one or more embodiments of the present disclosure;
FIG. 4 illustrates a binary structure using keyframe and non-keyframe AAUs when using silent AAU ;
FIG. 5 is a block diagram illustrating an example of a method in a receiver according to one or more embodiments of the present disclosure;
FIG. 6 is a block diagram illustrating an example of a method in a transmitter of an avatar animation unit using quantization and compression according to one or more embodiments of the present disclosure;
FIG. 7 is a block diagram illustrating an example of an encoding method of an avatar animation unit using quantization and compression according to one or more embodiments of the present disclosure;
FIG. 8 is a block diagram illustrating an example of a decoding method of an avatar animation unit using quantization and compression according to one or more embodiments of the present disclosure;
FIG. 9 shows an example architecture of a device which may be configured to implement methods according to one or more embodiments of the present disclosure; and
FIG. 10 shows an example of an embodiment of the syntax of a stream when the data are transmitted over a packet-based transmission protocol according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

The current effort in MPEG for the streaming of avatar animation is limited to animation of volumetric meshes. Volumetric meshes are animated by pre-computing correspondences to a template (shadow mesh) for every single frame of the volumetric sequence. A shadow mesh is a mesh that contains a lower fidelity than the volumetric mesh. The correspondences between the two are performed in such a way that each vertex of the volumetric mesh maps to a polygon of the shadow mesh. The objective of the shadow mesh is to provide additional semantical information to the volumetric mesh, e.g., skeletal structure and lower polygon mesh representation, permitting the transferring of animations of the shadow mesh onto the dependent volumetric mesh.

The correspondences between the volumetric mesh and the shadow mesh are performed in such a way that each vertex of the volumetric mesh maps to a polygon of the shadow mesh. At the application side, the volumetric mesh follows the motion of the shadow mesh as a result of the mapping between the two meshes. This behavior is achieved by defining a correspondence schema. For example, in a glTF file, the correspondence schema may be defined according to the syntax in Table 1.

**Table 1 - Definition of MPEG_mesh_linking extension**

| **Name** | **Type** | **Description** |
|---|---|---|
| correspondence | integer | Provides a reference to the accessor where correspondence information is stored. |
| mesh | integer | Provides a reference to the shadow mesh |
| pose | integer | Provides a reference to the accessor where the transformation information is stored. |
| weights | integer | Provides a reference to the accessor where the animation weights are stored. |

"MPEG_mesh_linking" extension is dependent on circular buffers ("MPEG_buffer_circular") and timed accessors ("MPEG_accessor_timed") to produce timed animations that are dependent on the shadow mesh. The parameters defined in Table 1 have to be transmitted to the decoder. The parameter "Correspondence" provides a reference to the accessor that describes the buffer where the correspondence between a dependent mesh and a shadow mesh is established. The parameter "Mesh" provides a reference to a mesh in the list of meshes that are referred to as "shadow mesh" and to which the correspondences are established. The parameter "Pose" provides a reference to the accessor that describes the buffer, that contains the transformation matrices of all the nodes of the dependent mesh to be re-animated. The parameter "Weights" provides a reference to the accessor that describes the buffer where the morph targets weights of the shadow mesh associated with the dependent mesh is available.

Animating avatar representations and streaming the animation parameters over a network, either for re-enactment or for driving other avatar representations that are supported on other platforms is not straightforward. Current solutions, for example in MPEG, lack the flexibility for such modality and only focuses on a very niche use case of dynamic mesh sequences.

Avatar representation format (ARF) arrived with rich properties, able to provide realistic renderings, simplistic animations and easy parametrizations that allow users to personalize and animate their characters freely. Its format is created with the intention of providing first interoperable format capable of representing and efficiently transmitting avatar related properties. The properties may be animation parameters, e.g., UV-based animation parameters related to texture formats, skeletal joints animations, blendshapes, keypoints, and more sophisticated controller mechanisms. The increased demand for video teleconferencing solutions requires efficient solutions for streaming of a diverse range of technologies, and MPEG has yet to provide an efficient solution for the problem for the streaming of avatar animation parameters.

Methods are disclosed hereinafter for generation (creation) and transmission of a bitstream for UV-based texture animations. UV mapping is the 3D modeling process of projecting a 3D model's surface to a 2D image for texture mapping. Said otherwise, UV mapping is the process of unwrapping a 3D model to create a 2D layout, allowing textures to be applied accurately. This layout, known as the UV map, is a 2D layout of a 3D model's surface that helps apply textures to the model. The "U" and "V" represent the horizontal and vertical coordinates of the texture. It works like unfolding a 3D object (like a box) onto a flat surface so you can accurately place a 2D image onto it. #The methods provide a mechanism for transmitting UV-based texture animation parameters, e.g., generated by a capturing device in a bitstream format that can be used to store, load, and stream this information to a receiver to animate a corresponding digital representation loaded by the receiver.

An avatar animation bitstream is composed of a sequence of avatar animation units (AAUs), which may also be referred to as NAL units. The general syntax structure for an AAU is shown in Table 1, where the data types used for the definition of different fields in the syntax structures are as follows: uimsbf: unsigned integer with most significant bit first, vic8: variable length character string that contains string data stored as a character array encoded in UTF-8, boolean: a single bit that represents a Boolean value, float32: a 32-bit floating point value represented according to the IEEE 754 specification.

Each avatar animation unit (AAU) contains a header and a payload. More precisely, the AAU comprises an AAU header containing at least a field that indicates the unit type, and a field that indicates the AAU payload as in Table 2. The contents of the payload depend on the type of the AAU, where ByteAlignment is a padding with up to seven bits set to 0 for the AAU payload to be byte-aligned.

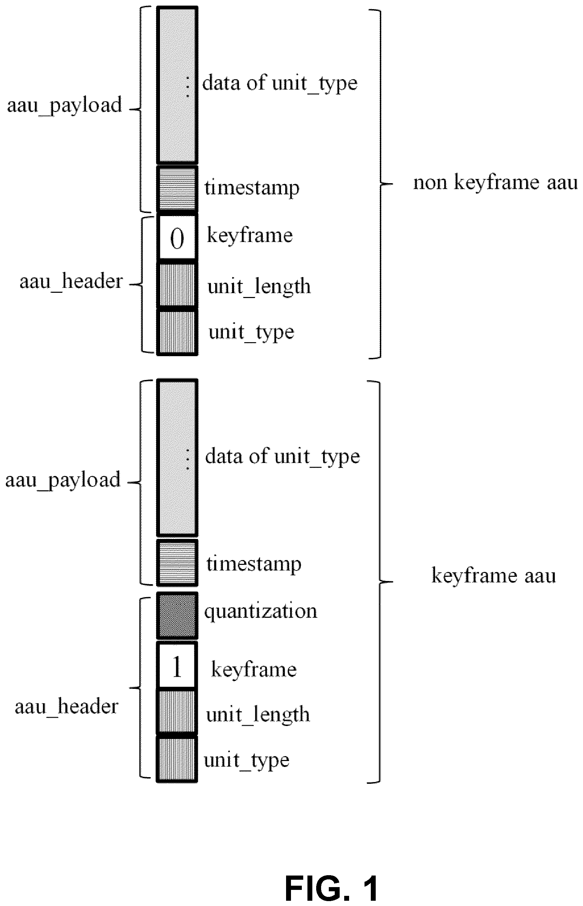

**FIG. 1** illustrates a binary structure using keyframe and non-keyframe AAUs. A keyframe AAU represents the main structure of the bitstream format including detailed information about the frame being transmitted, e.g., quantization of the data of unit type different from configuration type (AAU_CONFIG), and other properties of the payload defined in this document. A non-keyframe contains the same properties of the payload as for the keyframe with the exception that the data being transmitted is coded (reconstructed respectively) relative to a previous keyframe AAU. To this end, the data of a non-keyframe is a difference between a current frame and a last keyframe, using the aau_quantization as a precision parameter to encode (reconstruct respectively) the current frame.

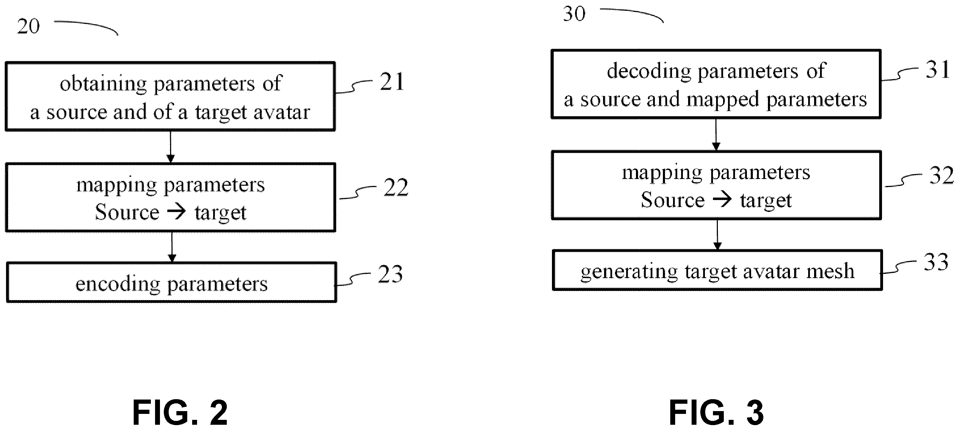

**FIG. 2** illustrates a method 20 for encoding avatar parameters according to one embodiment. At step 21, parameters of a source avatar parameters and parameters of a target avatar are obtained from at least a source. At step 22, the parameters of the source avatar are mapped to the parameters of the target avatar. At step 23, the mapped parameters and the source avatar parameters are encoded in a data stream.

**FIG. 3** illustrates a method 30 for decoding avatar parameters according to one embodiment. At step 31, parameters of a source avatar and mapped parameters are decoded from a data stream, e.g., the one generated by the encoding method of FIG. 2. At step 32, the mapping (e.g., mapped parameters) obtained in a previous packet are used to compute the target avatar parameters (e.g., weights) given the source avatar parameters (e.g., weights). At step 33, a target avatar mesh is generated and may be rendered.

The general syntax structure for an AAU is shown the following tables. Each animation unit contains a header and a payload. An AAU header contains at least a field that indicates the unit type. The contents of the payload depend on the type of the unit.

In one embodiment, the framing of the units may be done by signaling the unit (or the unit's payload) length/size in bytes in the AAU header. In another embodiment, the framing of the AAU is done externally through a separate framing mechanism.

**Table 2 - Syntax of avatar_animation_unit()**

| **Syntax** | **No. of bits** | **Mnemonic** |
|---|---|---|
| avatar_animation_unit() { | | |
| aau_header(); | | |
| aau_payload(); | **0-7** | **uimsbf** |
| **ByteAlignement** | | |
| } | | |

ByteAlignment is a padding with up to seven bits set to 0 for the AAU payload to be byte-aligned.

The syntax structure of the AAU header is as detailed in the following table:

**Table 3 - Syntax of aau_header()**

| **Syntax** | **No. of bits** | **Mnemonic** |
|---|---|---|
| aau_header() | | |
| { | | |
| **aau_unit_type;** | 7 | **uimsbf** |
| **aau_unit_length;** | 32 | **uimsbf** |
| **aau_keyframe;** | 1 | **boolean** |
| if (aau_keyframe) | | |
| aau_quantization | 16 | **uimsbf** |
| reserved | 1 | **uimsbf** |
| } | | |

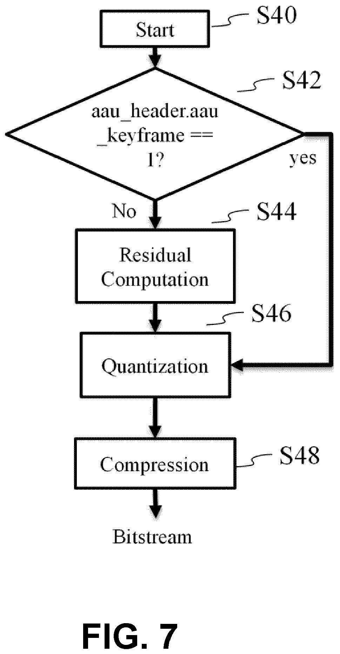

The aau_header() syntax construct contains the following syntax elements:
- aau_unit_type: indicates the type of the AAU. The possible values are described in the following table 4.
- aau_unit_length: indicates the size of the AAU payload in bytes.
- aau_keyframe: indicates whether the AAU payload is a keyframe.
- aau_quantization: defines a quantization scale for the carried data. The quantization processing model (a.k.a. encoding method) is described with reference to FIG. 7.

**Table 4 - Avatar Animation Unit type codes and corresponding payloads**

| **auh_unit_type** | **Name of AAU type** | **Content of AAU payload** |
|---|---|---|
| 0 | AAU_TARGET | aau_config_target() |
| 1 | AAU_CONFIG | aau_config_unit() |
| 2 | AAU_CONTROL | aau_control_unit() |
| 3 | AAU_MORPH | aau_morph_unit() |
| 4 | AAU_JOINT | aau_joint_unit() |
| 5 | AAU_KEYPOINT | aau_keypoint_unit() |
| 6 | AAU_KEYPOINT2D | aau_keypoint2d_unit() |
| 7 | AAU_LANDMARK | aau_landmark_unit() |
| 8 | AAU_SILENT | aau_silent_unit() |
| 9..20 | AAU_RSV_9.. AAU_RSV_20 | Reserved AAU types. |
| 21..31 | AAU_UNSPEC_21.. AAU_UNSPEC_31 | Unspecified AAU types. |

The aau_payload() is defined as shown in the following table 5. As can be seen from the definition, depending on the value of auh_type in the aau_header() syntex construct, the payload content will be different.

**Table 5 - Syntax of aau_payload()**

| **Syntax** | **No. of bits** | **Mnemonic** |
|---|---|---|
| aau_payload(){ | | |
| aau_timestamp; | **32** | **uimsbf** |
| if (auh_type == AAU_TARGET) | | |
| aau_target_unit() | | |
| else if (auh_type == AAU_CONFIG) | | |
| aau_config_unit() | | |
| else if (auh_type == AAU_CONTROL) | | |
| aau_control_unit() | | |
| else if (auh_type == AAU_MORPH) | | |
| aau_morph_unit() | | |
| else if (auh_type == AAU_JOINT) | | |
| aau_control_unit() | | |
| else if (auh_type == AAU_KEYPOINT) | | |
| aau_joint_unit() | | |
| else if (auh_type == AAU_KEYPOINT2D) | | |
| aau_control_unit() | | |
| else if (auh_unit_type == AAU_LANDMARK) | | |
| aau_landmark_unit() | | |
| else if (auh_unit_type == AAU_SILENT) | | |
| aau_silent_unit() | | |
| } | | |

The aau_payload() syntax construct contains the following syntax element aau_timestamp is the timestamp of the AAU in ticks. The timestamp in seconds can be calculated as timestamp/timescale, where timescale is signalled in the configuration AAU.

A target avatar configuration AAU is an AAU whose auh_type field is set to AAU_TARGET. The payload of such AAU is defined as shown in Table 6.

**Table 6 - Syntax of aau_target_unit()**

| **Syntax** | **No. of bits** | **Mnemonic** |
|---|---|---|
| aau_target_unit() | | |
| { | | |
| **acu_avatar_id;** | **3** | **uimsbf** |
| **acu_lod_id;** | **3** | **uimsbf** |
| **acu_skeleton_id;** | **3** | **uimsbf** |
| **acu_controller_set_id;** | **3** | **uimsbf** |
| **acu_keypoint_set_id;** | **3** | **uimsbf** |
| } | | |

The aau_config_unit() syntax construct contains the following syntax elements:
- acu_avatar_id: is an integer identifying the avatar to animate. In some embodiments, this field may not be present. In some embodiments, this field may be replaced by two fields encoding a string, the first one being the length of the string and the second one the characters of the string.
- acu_lod_id: is an integer identifying the Level Of Detail (LOD) of the avatar to animate. In some embodiments, this field may not be present.
- acu_skeleton_id: is an integer identifying the skeleton of the avatar to animate. In some embodiments, this field may be named "acu_jointset_index". In some embodiments, this field may not be present.
- acu_controller_set_id: is an integer identifying the controller set of the avatar to animate. In some embodiments, this field may not be present.
- acu_keypoint_set_id: is an integer identifying the keypoint set of the avatar to animate. In some embodiments, this field may not be present.

In another embodiment, the target avatar information may alternatively be signalled as part of the information in a configuration AAU similar to the one defined in the following subsection.

A configuration AAU is an AAU whose auh_type field is set to AAU_CONFIG. The payload of such AAU is defined as shown in Table 7.

**Table 7 - Syntax of aau_config_unit()**

| **Syntax** | **No. of bits** | **Mnemonic** |
|---|---|---|
| aau_config_unit() | | |
| { | | |
| **acu_profile_length;** | **8** | **uimsbf** |
| **acu_animation_profile;** | **acu_profile_length * 8** | **vlc8** |
| **acu_timescale;** | **32** | **uimsbf** |
| **acu_control_precision_minus1;** | **3** | **uimsbf** |
| **acu_controller_correpondence_flag;** | **1** | **boolean** |
| if (acu_controller_correspondence_flag) { | | |
| **acu_controllerset_id;** | **3** | **uimsbf** |
| **acu_controller_count;** | **10** | **uimsbf** |
| for (i=0; i<acu_controller_count; i++) { | | |
| **acu**_**target_controller_index[i];** | **10** | **uimsbf** |
| } | | |
| } | | |
| **acu_morph_target_correspondence_flag;** | **1** | **boolean** |
| if (acu_morph_target_correspondence_flag) { | | |
| **acu_morphset_id;** | **3** | **uimsbf** |
| **acu_morph_target_count;** | **10** | **uimsbf** |
| for (i=0; i<acu_ morph target_count; i++) { | | |
| **acu_target_morph_target_index[i]; } }** | **10** | **uimsbf** |
| } | | |
| } | | |
| **acu_joint_correpondence_flag;** | 1 | boolean |
| if (acu_joint_correspondence_flag) { | | |
| **acu_jointset_id;** | 3 | uimsbf |
| **acu_joint_count;** | 10 | uimsbf |
| for (i=0; i<acu_joint_count; i++) { | | |
| **acu_target_joint_index[i];** | 10 | uimsbf |
| } | | |
| } | | |
| **acu_keypoint_correpondence_flag;** | 1 | boolean |
| if (acu_keypoint_correspondence_flag) { | | |
| **acu_keypointset_id;** | 3 | uimsbf |
| **acu_keypoint_count;** | 10 | uimsbf |
| for (i=0; i<acu_keypoint_count; i++) { | | |
| **acu**_**target_**keypoint_index[i]; | 10 | uimsbf |
| } | | |
| } | | |
| **acu_keypoint2d_correpondence_flag;** | 1 | boolean |
| if (acu_keypoint2d_correspondence_flag) { | | |
| **acu_keypoint2dset_id;** | 3 | uimsbf |
| **acu_keypoint2d_count;** | 16 | uimsbf |
| for (i=0; i<acu_keypoint2d_count; i++) { | | |
| **acu_target_keypoint2d_index[i];** | 16 | uimsbf |
| **}** | | |
| **}** | | |
| **acu_landmark_correpondence_flag;** | 1 | boolean |
| if (acu_landmark_correspondence_flag) { | | |
| **acu_landmarkset_id;** | 3 | uimsbf |
| **acu_landmark_count;** | 10 | uimsbf |
| for (i=0; i<acu_landmark_count; i++) { | | |
| **acu_target_landmark_index[i];** | 10 | uimsbf |
| } | | |
| } | | |
| **acu_reserved_correspondence_flags;** | 4 | booleans |
| **acu_reserved_unspecified_flags;** | 22 | booleans |
| } | | |

The aau_config_unit() syntax construct contains the following syntax elements:
- acu_profile_length: is the number of characters in the profile string signalled by acu_animation_ profile.
- acu_animation_profile: is a character string with the name of the profile that generated stream conforms to.
- acu_timescale: is the number of ticks per second.
- acu_control_precision_minus1 : plus 1 specifies the size in bytes of the target avatar index in control AAUs. The value of this field shall be greater than 0 and smaller than or equal to 3.
- acu_controller_correspondence_flag: is a flag indicating whether controller correspondence information is signalled in this configuration AAU. Value 0 indicates that no correspondence information is present. Value 1 indicates that controller correspondence information is present in the configuration AAU.
- acu_controller_joint_index[i]: is the index of the target controller corresponding to the source avatar's i-th controller.
- acu_morph target _correspondence_flag: is a flag indicating whether morph target correspondence information is signalled in this configuration AAU. Value 0 indicates that no correspondence information is present. Value 1 indicates that morph target correspondence information is present in the configuration AAU.
- acu target_morph target_index[i]: is the index of the target morph target corresponding to the source avatar's i-th morph target.
- acu_joint_correspondence_flag: is a flag indicating whether joint correspondence information is signalled in this configuration AAU. Value 0 indicates that no correspondence information is present. Value 1 indicates that joint correspondence information is present in the configuration AAU.
- acu_target_joint_index[i]: is the index of the target avatar skeleton joint corresponding to the source avatar's i-th joint.
- acu_keypoint_correspondenceflag: is a flag indicating whether keypoint correspondence information is signalled in this configuration AAU. Value 0 indicates that no correspondence information is present. Value 1 indicates that keypoint correspondence information is present in the configuration AAU.
- acu_target_keypoint_index[i]: is the index of the target keypoint corresponding to the source avatar's i-th keypoint.acu_keypoint_correspondence_flag: is a flag indicating whether keypoint correspondence information is signalled in this configuration AAU. Value 0 indicates that no correspondence information is present. Value 1 indicates that keypoint correspondence information is present in the configuration AAU.
- acu_target_keypoint__index[i]: is the index of the target keypoint corresponding to the source avatar's i-th keypoint.
- acu_keypoint2d_correspondenceflag: is a flag indicating whether 2D keypoint correspondence information is signalled in this configuration AAU. Value 0 indicates that no correspondence information is present. Value 1 indicates that 2D keypoint correspondence information is present in the configuration AAU.
- acu_target_keypoint2d_index[i]: is the index of the target 2D keypoint corresponding to the source avatar's i-th 2D keypoint.
- acu_landmarks_correspondenceflag: is a flag indicating whether landmark correspondence information is signalled in this configuration AAU. Value 0 indicates that no correspondence information is present. Value 1 indicates that landmarks correspondence information is present in the configuration AAU.
- acu_landmarkset_id: is an integer identifying which collection of landmarks is used from the avatar.
- acu_target_landmark_index[i]: is the index of the target avatar skeleton joint corresponding to the source avatar's i-th joint.
- acu_keypoint2dset_id: is an integer identifying which collection of 2D keypoints is used from the avatar.
- acu_keypointset_id: is an integer identifying which collection of keypoints is used from the avatar.
- acu_jointset_id: is an integer identifying which collection of joints is used from the avatar.
- acu_morphset _id: is an integer identifying which collection of morphtargets is used from the avatar.
- acu_controllerset_id: is an integer identifying which collection of animation controllers is used from the avatar.
- acu_reserved_correspondence_flags: are reserved flags for the correspondences of future avatar components.
- acu_reserved_unspecified_flags: are flags for unspecified features.

**In** another embodiment, the configuration AAU may explicitly signal the index of the source component (controller, morph target, joint, keypoint or keypoint 2D) in addition to the index of the target component (same). The corresponding syntax for this is shown inTable 8, where the syntax element acu_source_<component>_index[i] indicates the i-th index of a source component signalled in the control AAU and acu_target_<component>_index[i] indicates the corresponding remove avatar component index.

**Table 8 - Syntax of aau_config_ unit() with explicit signalling of source indices**

| **Syntax** | **No. of bits** | **Mnemonic** |
|---|---|---|
| aau_config _unit() | | |
| { | | |
| **acu_profile_length;** | **8** | **uimsbf** |
| **acu_animation_profile;** | **acu_profile_length * 8** | **vic8** |
| **acu_timescale;** | **32** | **uimsbf** |
| **acu_control_precision;** | | |
| **acu_controller_correpondence_flag;** | **1** | **boolean** |
| **if (acu controller correspondence_flag) {** | | |
| **acu_controller_count;** | **10** | **uimsbf** |
| for (i=0; i<acu_controller_count; i++) { | | |
| **acu_source_controller_index[i];** | **10** | **uimsbf** |
| **acu_target_controller_index[i];** | **10** | **uimsbf** |
| **}** | | |
| **}** | | |
| **acu_morph_target_correspondence_flag;** | **1** | **boolean** |
| if (acu morph target_correspondence _flag) { | | |
| **acu_morph_target_count;** | **10** | **uimsbf** |
| **for (i=0; i<acu_ morph target_count; i++) {** | | |
| **acu_source_morph_target_index[i];** | **10** | **uimsbf** |
| **acu_target_morph_target_index[i];** | **10** | **uimsbf** |
| **}** | | |
| **}** | | |
| **acu_joint_correpondence_flag;** | **1** | **boolean** |
| if (acu_joint_correspondence_flag) { | | |
| **acu_joint_count;** | **10** | **uimsbf** |
| for (i=0; i<acu_joint_count; i++) { | | |
| **acu_source_joint_index[i];** | **10** | **uimsbf** |
| **acu_target_joint_index[i];** | **10** | **uimsbf** |
| **}** | | |
| **}** | | |
| **acu_keypoint_correpondence_flag;** | **1** | **boolean** |
| if (acu keypoint_correspondence _flag) { | | |
| **acu_keypoint_count;** | **10** | **uimsbf** |
| for (i=0; i<acu_keypoint_count; i++) { | | |
| **acu_source_keypoint_index[i];** | **10** | **uimsbf** |
| **acu_target_keypoint_index[i];** | **10** | **uimsbf** |
| **}** | | |
| **}** | | |
| **acu_keypoint2d_correpondence_flag;** | **1** | **boolean** |
| if (acu keypoint2d correspondence_flag) { | | |
| **acu_keypoint2d_count;** | **16** | **uimsbf** |
| for (i=0; i<acu_keypoint2d_count; i++) { | | |
| **acu_source_keypoint2d_index[i];** | **16** | **uimsbf** |
| **acu_target_keypoint2d_index[i];** | **16** | **uimsbf** |
| **}** | | |
| **}** | | |
| **acu_landmark_correpondence _flag;** | **1** | **boolean** |
| if (acu_landmarkcorrespondence_flag) { | | |
| **acu_landmarkset_id;** | **3** | **uimsbf** |
| **acu_landmark_count;** | **10** | **uimsbf** |
| for (i=0; i<acu_landmark_count; i++) { | | |
| **acu_source_landmarkindex[i];** | **10** | **uimsbf** |
| **acu_target_landmark_index[i];** | **10** | **uimsbf** |
| **}** | | |
| } | | |
| **acu_reserved_ correspondence flags;** | **4** | **booleans** |
| **acu_reserved_unspecified_flags;** | **22** | **booleans** |
| } | | |

In another embodiment, in addition to the information signaled in the previous two embodiments, the configuration AAU may include information on the target avatar instead of having a separate AAU type for that information. An example configuration AAU based on this embodiment is as in Table 9.

**Table 9**

| **Syntax** | **No. of bits** | **Mnemonic** |
|---|---|---|
| aau_config_unit() | | |
| { | | |
| **acu_profile_length;** | **8** | **uimsbf** |
| **acu_animation_profile;** | **acu_profile_length * 8** | **vlc8** |
| **acu_timescale;** | **32** | **uimsbf** |
| **acu_control_precision_minus1;** | **3** | **uimsbf** |
| **acu_target_avatar_info_flag;** | **1** | **boolean** |
| if (acu_target_avatar_info_flag) { | | |
| **acu_avatar_id;** | **3** | **uimsbf** |
| **acu_lod_id;** | **3** | **uimsbf** |
| **acu_skeleton_id;** | **3** | **uimsbf** |
| **acu_controller_set_id;** | **3** | **uimsbf** |
| **acu_keypoint_set_id;** | **3** | **uimsbf** |
| } | | |
| **acu controller correpondence flag;** | **1** | **boolean** |
| if (acu_controller correspondence_flag) { | | |
| **acu_controller_count;** | **10** | **uimsbf** |
| for (i=0; i<acu_controller_count; i++) { | | |
| **acu**_**targe_controller_index[i];** | **10** | **uimsbf** |
| } | | |
| } | | |
| **acu_morph_target_correspondence_flag;** | **1** | **boolean** |
| if (acu_morph target_correspondence _flag) { | | |
| **acu_morph_target_count;** | **10** | **uimsbf** |
| for (i=0; i<acu morph target_count; i++) { | | |
| **acu_target_morph target_**index[i]; | **10** | **uimsbf** |
| } | | |
| } | | |
| **acu_joint_correpondence_flag;** | **1** | **boolean** |
| if (acu_joint_correspondence_flag) { | | |
| **acu_joint_count;** | **10** | **uimsbf** |
| for (i=0; i<acu_joint_count; i++) { | | |
| **acu_target_joint_index[i];** | **10** | **uimsbf** |
| } | | |
| } | | |
| **acu_keypoint_correpondence_flag;** | **1** | **boolean** |
| if (acu keypoint correspondence flag) { | | |
| **acu_keypoint_count;** | **10** | **uimsbf** |
| for (i=0; i<acu_keypoint_count; i++) { | | |
| **acu_target_keypoint_index[i];** | **10** | **uimsbf** |
| **}** | | |
| } | | |
| **acu_keypoint2d_correpondence_flag;** | **1** | **boolean** |
| if (acu keypoint2d correspondenceflag) { | | |
| **acu_keypoint2d_count;** | **16** | **uimsbf** |
| for (i=0; i<acu_keypoint2d_count; i++) { | | |
| **acu_target_keypoint2d_index[i]; } }** | **16** | **uimsbf** |
| } | | |
| } | | |
| **acu_landmark_correpondence _flag;** | **1** | **boolean** |
| if (acu_landmark_correspondence_flag) { | | |
| **acu_landmarkset_id;** | **3** | **uimsbf** |
| **acu_landmark_count;** | **10** | **uimsbf** |
| for (i=0; i<acu_landmark_count; i++) { | | |
| **acu_target_landmark_index[i];** | **10** | **uimsbf** |
| } | | |
| } | | |
| **acu_reserved_correspondence_flags;** | **4** | **booleans** |
| **acu_reserved_unspecified_flags;** | **22** | **booleans** |
| } | | |

A control AAU is an AAU whose auh_type field is set to AAU_CONTROL. The payload of such AAU is defined as shown in Table 10.

**Table 10 - Syntax of aau_control_unit()**

| **Syntax** | **No. of bits** | **Mnemonic** |
|---|---|---|
| aau_control_unit() | | |
| { | | |
| **atu_controller_count_minus1;** | **10** | **uimsbf** |
| **for** (i=1; i<atu_controller_count^{_}minusl + 1; | | |
| i++) { | | |
| **atu_controller_index[i];** | **acu_control_precision*8** | **uimsbf** |
| **atu_control_weight[i];** | **32** | **float** |
| } | | |
| } | | |

The aau_control_unit() syntax construct contains the following syntax elements:
- atu_controller_count_minus1: plus 1 indicates the number of controller weights present in the control AAU.
- atu_controller_index[i]: is the index of the i-th source controller whose weight is signalled in the control AAU.
- atu_control_weight[i]: is the weight to be applied for the target controller corresponding to the i-th source controller in the control AAU.

A morph target AAU is an AAU whose auh_type field is set to AAU_MORPH. The payload of such AAU as shown in Table 11.

**Table 11 - Syntax of aau_morph_unit()**

| **Syntax** | **No. of bits** | **Mnemonic** |
|---|---|---|
| aau_morph _unit() | | |
| { | | |
| **amu_morph_target_count_minus1;** | **10** | **uimsbf** |
| for (i=1; i<amu_morph target_count_minus1 + 1; i++) { | | |
| **amu_morph_target_index[i];** | **acu_morph_precision*8** | **uimsbf** |
| **amu_morph_target_weight[i];** | **32** | **float** |
| **}** | | |
| **}** | | |

The aau_morph_unit() syntax construct contains the following syntax elements:
- amu_morph_target_count_minus1: plus 1 indicates the number of morph targets whose weights are signalled in this morph target AAU.
- amu_morph target_index[i] is the index of the i-th morph target whose weight is signalled in the control AAU.
- amu_morph target__weight[i] is the weight of the i-th morph target whose weight is signalled in the control AAU.

A joint transform AAU is an AAU whose auh_type field is set to AAU_JOINT. The payload of such AAU is defined as shown in Table 12.

**Table 12 - Syntax of aau_joint_unit()**

| **Syntax** | **No. of bits** | **Mnemonic** |
|---|---|---|
| aau_joint_unit() | | |
| { | | |
| **aju_joint_count_minus1;** | **10** | **uimsbf** |
| for (i=1; i<aju_joint_count_minus1 + 1; i++) { | | |
| **aju_source_joint_index[i];** | **10** | **uimsbf** |
| **aju_target_joint_index[i];** | **10** | **uimsbf** |
| **aju_joint_transform[i];** | **16 * 32** | **float** |
| } | | |
| } | | |

The aau_joint_unit() syntax construct contains the following syntax elements:
- aju_joint_count_minus1: plus 1 indicate the number of joint transformations signalled in the joint transform AAU.
- aju_source_joint_index[i]: indicates the source joint index for the i-th joint signalled in the joint transform AAU.
- aju_target_joint_index[i]: indicates the target joint index for the i-th joint signalled in the joint transform AAU.
- aju_joint_transform[i]: is the transformation matrix for the target joint corresponding to the source joint whose index is signalled by the field aju _source_joint_index[i].

In some embodiments, the aju_joint_transform[i] field may be replaced by an encoding of optional translation, rotation and scale, as presented in Table 13.

**Table 13 - Syntax of aau_joint_unit() with translation, rotation, and scale**

| **Syntax** | **No. of bits** | **Mnemonic** |
|---|---|---|
| aau_joint unit() | | |
| { | | |
| **aju_joint_count_minus1;** | **10** | **uimsbf** |
| for (i=1; i<aju_joint_count_minus1 + 1; i++) { | | |
| **aju_source_joint_index[i];** | **10** | **uimsbf** |
| **aju_target_joint_index[i];** | **10** | **uimsbf** |
| **aju_joint_translation_flag[i];** | **1** | **boolean** |
| if (aju_joint_translation_flag[i]) { | | |
| **aju_joint_translation[i];** | **3 * 32** | **float** |
| } | | |
| **aju_joint_rotation_flag[i];** | **1** | **boolean** |
| if (aju_joint_rotation_flag[i]) { | | |
| **aju_joint_quaternion_flag[i];** | **1** | **boolean** |
| if (aju_joint_quaternion _flag[i]) { | | |
| **aju_joint_quaternion[i];** | **4 * 32** | **float32** |
| }else { | **4 * 32** | **float32** |
| **aju_joint_rotation[i];** | **4 * 32** | **float32** |
| } | | |
| } | | |
| **aju_joint_scale_flag[i];** | **1** | **boolean** |
| if (aju_joint_scale_flag[i]) **{** | | |
| **aju_joint_scale[i];** | **3 * 32** | **float** |
| **}** | | |
| } | | |
| } | | |

- aju_joint_translation_flag[i]: is a flag indicating whether a translation is signalled for the i-th joint.
- aju_joint_translation[i]: is the translation for the target joint corresponding to the source joint whose index is signalled by the field aju _source_joint index[i].
- aju_joint_rotation_flag[i]: is a flag indicating whether a rotation is signalled for the i-th joint.
- aju_joint_rotation [i]: is the rotation for the target joint corresponding to the source joint whose index is signalled by the field aju_source_joint_index[i].
- aju_joint_quatemion_flag[i]: is a flag indicating whether a quaternion type of rotation is signalled for the i-th joint.
- aju_joint_quatemion [i]: is the quaternion type of rotation for the target joint corresponding to the source joint whose index is signalled by the field aju_source_joint_index[i].
- aju_joint_scale_flag[i]: is a flag indicating whether a scale is signalled for the i-th joint.
- aju_joint_scale[i]: is the scale for the target joint corresponding to the source joint whose index is signalled by the field aju _source_joint index[i].

A keypoint AAU is an AAU whose auh_type field is set to AAU_KEYPOINT. The payload of such AAU is defined as shown in Table 14.

**Table 14 - Syntax of aau_keypoint_unit()**

| **Syntax** | **No. of bits** | **Mnemonic** |
|---|---|---|
| aau_keypoint_unit() | | |
| { | | |
| **aku_keypoint_count_minus1;** | **16** | **uimsbf** |
| for (i=1; i<aku_keypoint_count_minus1 + 1; i++) { | | |
| **aku_source_keypoint_index[i];** | **16** | **uimsbf** |
| **aku_keypoint_transform[i];** | **16 * 32** | **float** |
| } | | |
| } | | |

The aau_keypoint_unit() syntax construct contains the following syntax elements:
- aku_keypoint_count_minus1: plus 1 indicates the number of keypoint transformations signalled in the kypoint transform AAU.
- aku_source_keypoint_index[i]: indicates the source keypoint index for the i-th keypoint signalled in the keypoint transform AAU.
- aku keypoint_transform[i]: is the transformation matrix for the target keypoint corresponding to the source keypoint whose index is signalled by the field aku_source keypoint_index[i].

In some embodiments, the aku_keypoint_transform[i] field may be replaced by an encoding of optional translation, rotation, and scale, as presented in Table 15.

**Table 15 - Syntax of aau_keypoint_unit() with translation, rotation and scale**

| **Syntax** | **No. of bits** | **Mnemonic** |
|---|---|---|
| aau_keypoint_unit() | | |
| { | | |
| **aku_keypoint_count_minus1;** | **10** | **uimsbf** |
| for (i=1; i<aku_joint_count_minus1 + 1; i++) { | | |
| **aku_source_keypoint_index[i];** | **10** | **uimsbf** |
| **aku_keypoint_translation_flag[i];** | **1** | **boolean** |
| if (aku_keypoint_translation_flag[i]) { | | |
| **aku_keypoint_translation[i];** | **3 * 32** | **float** |
| } | | |
| **aku_keypoint_rotation_flag[i];** | **1** | **boolean** |
| if (aku keypoint rotation flag[i]) { | | |
| **aku_keypoint_rotation[i];** | **4 * 32** | **float** |
| } | | |
| **aku_keypoint_scale_flag[i];** | **1** | **boolean** |
| if (aku keypoint_scale__flag[i]) { | | |
| **aku_keypoint_scale[i];** | **3 * 32** | **float** |
| } | | |
| } | | |
| } | | |

- aku_keypoint_translation_flag[i]: is a flag indicating whether a translation is signalled for the i-th keypoint.
- aku_keypoint_translation[i]: is the translation for the target keypoint corresponding to the source keypoint whose index is signalled by the field aku_source_keypoint__index[i].
- aku_keypoint_rotation_flag[i]: is a flag indicating whether a rotation is signalled for the i-th keypoint.
- aku_keypoint_rotation [i]: is the rotation for the target keypoint corresponding to the source keypoint whose index is signalled by the field aku_source_keypoint_index[i].
- aku keypoint_scale_flag[i]: is a flag indicating whether a scale is signalled for the i-th keypoint.
- aku_keypoint_scale[i]: is the scale for the target keypoint corresponding to the source keypoint whose index is signalled by the field aku_source_keypoint_index[i].

A 2D keypoint AAU is an AAU whose auh_type field is set to AAU_KEYPOINT2D. The payload of such AAU is defined as shown in Table 16.

**Table 16 - Syntax of aau_keypoint2d_unit()**

| **Syntax** | **No. of bits** | **Mnemonic** |
|---|---|---|
| aau_keypoint2d_unit() | | |
| { | | |
| **ak2u_keypoint2d_count_minus1;** | **16** | **uimsbf** |
| for (i=1; i<ak2u_keypoint2d_count_minus1 + 1; i++) { | | |
| **ak2u_source_keypoint2d_index[i];** | **16** | **uimsbf** |
| **ak2u_keypoint2d_transform[i];** | **9 * 32** | **float** |
| } | | |
| } | | |

The aau_keypoint2d _unit() syntax construct contains the following syntax elements:
- ak2u_keypoint2d_count_minus1: plus 1 indicate the number of 2D keypoint transformations signalled in the joint transform AAU.
- ak2u_source_keypoint2d_index[i]: indicates the source 2D keypoint index for the i-th 2D keypoint signalled in the 2D keypoint transform AAU.
- ak2u_keypoint2d_transform[i]: is the transformation matrix for the target 2D keypoint corresponding to the source 2D keypoint whose index is signalled by the field ak2u_source_keypoint2d_index[i].

In some embodiments, the ak2u_keypoint2d_transform[i] field may be replaced by an encoding of optional translation, rotation, and scale, as presented in Table 17.

**Table 17 - Syntax of aau_keypoint2d_unit() with translation, rotation and scale**

| **Syntax** | **No. of bits** | **Mnemonic** |
|---|---|---|
| aau**_**keypoint2d _unit() | | |
| { | | |
| **ak2u_keypoint2d_count_minus1;** | **16** | **uimsbf** |
| for (i=1; i<ak2u_joint2d_count_minus1 + 1; i++) { | | |
| **ak2u_source_keypoint2d_index[i];** | **16** | **uimsbf** |
| **ak2u_keypoint2d_translation_flag[i];** | **1** | **boolean** |
| if (ak2u_keypoint2d_translation_flag[i]) { | | |
| **ak2u_keypoint2d_translation[i];** | **2 * 32** | **float** |
| } | | |
| **ak2u_keypoint2d_rotation_flag[i];** | **1** | **boolean** |
| **if (ak2u_keypoint2d**_rotation_flag[i]) { | | |
| **ak2u_keypoint2d_rotation[i];** | **3 * 32** | **float** |
| } | | |
| ak2u_keypoint2d_scale_flag[i]; | **1** | **boolean** |
| if (ak2u _keypoint2d_scale_flag[i]) { | | |
| ak2u_keypoint2d_scale[i]; | **2 * 32** | **float** |
| } | | |
| } | | |
| } | | |

- ak2u_keypoint2d_translation flag[i]: is a flag indicating whether a translation is signalled for the i-th 2D keypoint.
- ak2u_keypoint2d_translation[i]: is the translation for the target 2D keypoint corresponding to the source 2D keypoint whose index is signalled by the field ak2u_source_keypoint2d_index[i].
- ak2u_keypoint2d_rotation_flag[i]: is a flag indicating whether a 2D rotation is signalled for the i-th 2D keypoint.
- ak2u_keypoint2d_rotation [i]: is the rotation for the target 2D keypoint corresponding to the source 2D keypoint whose index is signalled by the field ak2u_source_keypoint2d index[i].
- ak2u_keypoint2d_scale_flag[i]: is a flag indicating whether a scale is signalled for the i-th 2D keypoint.
- ak2u_keypoint2d_scale[i]: is the scale for the target 2D keypoint corresponding to the source 2D keypoint whose index is signalled by the field ak2u_source_keypoint2d_index[i].

A landmark AAU is an AAU whose aau_unit_type field is set to AAU_LANDMARK. The payload of such AAU is defined as shown in Table 18.

**Table 18 - Syntax of aau_landmark_unit() with translation, rotation, and scale**

| **Syntax** | **No. of bits** | **Mnemonic** |
|---|---|---|
| aau_landmark_unit() | | |
| { | | |
| **alu_landmark_count_minus1;** | **10** | **uimsbf** |
| for (i=1; i<alu_landmark_count_minus1 + 1; i++) { | | |
| **alu_source_landmark_index[i];** | **10** | **uimsbf** |
| **alu_target_landmark_index[i];** | **10** | **uimsbf** |
| **alu_landmark_transform[i];** | **16 * 32** | **float32** |
| } | | |
| } | | |

The aau_landmark_unit() syntax construct contains the following syntax elements:
- alu_landmark_count_minus1: plus 1 indicate the number of landmark transformations signalled in the landmark animation AAU.
- alu_source_landmark_index[i]: indicates the source landmark index for the i-th landmark signalled in the landmark animation AAU.
- alu_target_landmark_index[i]: indicates the target landmark index for the i-th landmark signalled in the landmark animation AAU.
- alu_landmark_transform[i]: is the transformation matrix for the target landmark corresponding to the source landmark whose index is signalled by the field aju_source_ landmark _index[i].

Alternatively, the alu_landmark_transform[i] field may be replaced by an encoding of optional translation, rotation, scale, velocity, inertia and uncertainty as presented in Table 19.

**Table 19 - Alternative syntax of aau_landmark_unit()**

| **Syntax** | **No. of bits** | **Mnemonic** |
|---|---|---|
| aau_landmark_unit() | | |
| **{** | | |
| **alu_landmark_count_minus1;** | **10** | **uimsbf** |
| for (i=1; i<alu_landmark_count_minus1 + 1; i++) { | | |
| **alu_source_landmark_index[i];** | **10** | **uimsbf** |
| **alu_target_landmark_index[i];** | **10** | **uimsbf** |
| **alu_landmark_translation_flag[i];** | **1** | **boolean** |
| if (alu_landmarktranslation_flag[i]) { | | |
| **alu_landmark_translation[i];** | **3 * 32** | **float32** |
| **}** | | |
| **alu_landmark_position_flag[i];** | **1** | **boolean** |
| if (alu_landmark_position_flag[i]) { | | |
| **alu_landmark_position[i];** | **3 * 32** | **float32** |
| **}** | | |
| **alu_landmark_uncertainty_flag[i];** | **1** | **boolean** |
| if (alu_landmark_uncertainty_flag[i]) { | | |
| **alu_landmark_uncertainty[i];** | **32** | **float32** |
| } | | |
| } | | |
| } | | |

- alu_landmark_translation flag[i]: is a flag indicating whether a translation is signalled for the i-th landmark.
- alu_landmark_translation[i]: is the translation for the target landmark corresponding to the source landmark whose index is signalled by the field alu_source_landmark_index[i].
- alu_landmark_position_flag[i]: is a flag indicating whether a position is signalled for the i-th landmark.
- alu_landmark_position [i]: is the absolute position for the target landmark corresponding to the absolute position of the source landmark whose index is signalled by the field alu_source_landmark_index[i].
- alu_uncertainty_flag[i]: is a flag indicating whether an uncertainty is signalled for the i-th landmark.
- alu_landmark_uncertainty [i]: is the uncertainty of the prediction for the animation parameter for the target landmark corresponding to the source landmark whose index is signalled by the field alu_source_landmark_index[i].

A control AAU is an AAU whose aau_unit_type field is set to AAU_SILENT. The payload of such AAU is defined in Table 20.

| **Syntax** | **No. of bits** | **Mnemonic** |
|---|---|---|
| aau_silent_unit() | | |
| { | | |
| **asu_timescale;** | **32** | **uimsbf** |
| **asu_duration;** | **24** | **uimsbf** |
| } | | |

The asu_silent_unit() syntax construct contains the following syntax elements:
- asu_timescale: number of ticks per second. The aau_timestamp in seconds becomes aau_timestamp/asu_timescale.
- asu_duration: The duration of the silent packet. The asu_duration is in the asu_timescale, i.e., asu_duration/asu_timescale indicates the duration in seconds.

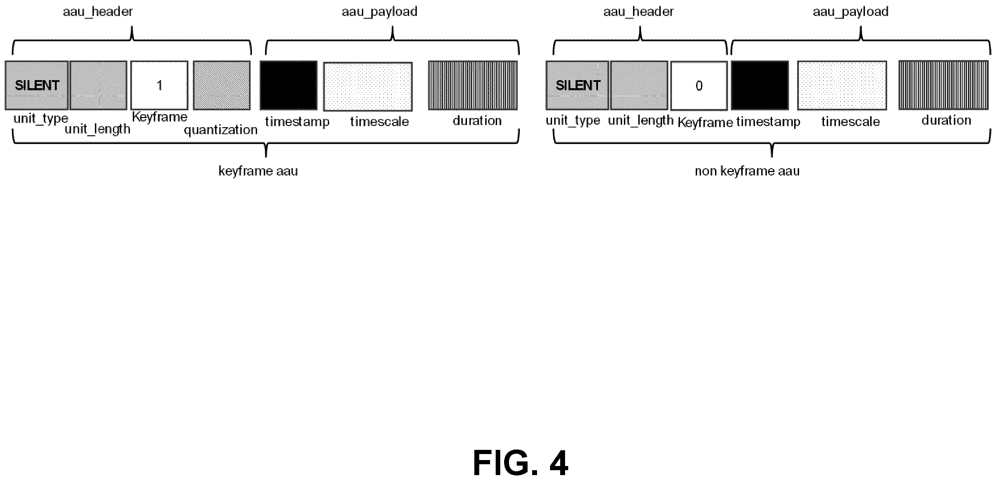

**FIG. 4** illustrates the composition of the bitstream for keyframes and non-keyframes streams when using silent unit types. The header provides the context of the payload and if the payload is for a "silent unit" then the payload only contains the "timestamp", "timescale" and "duration". These units in the payload tell the receiver that the sender (a.k.a. transmitter) is still alive but is sending no data related to the animation streams, therefore it tells the receiver to not close the connections. The behavior of the sender when sending silent unit packages is unknown and not relevant to the context of the present principles. More precisely, timescale (asu_timescale) tells the rate that the message is being sent, and duration, i.e., how long it has passed since a first packet. The receiver may only acknowledge this information and understand that the sender is still alive. Consequently, the receiver will not close its connections.

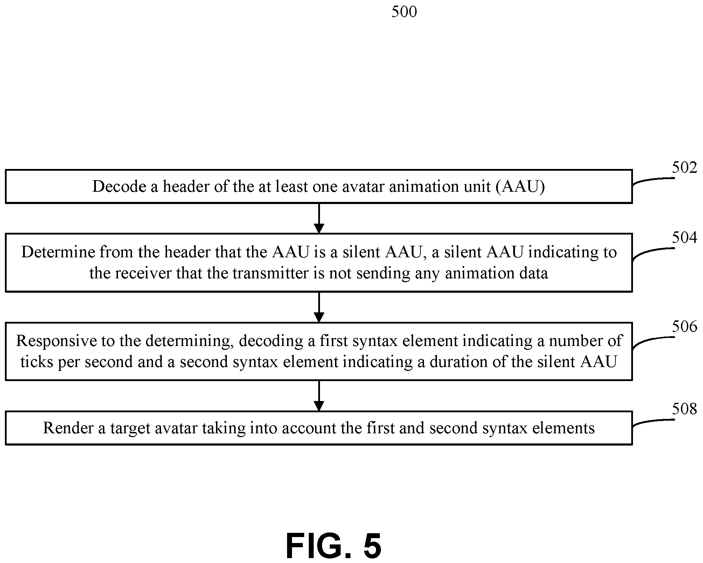

**FIG. 5** is a block diagram illustrating an example of a method 500, in a receiver, according to one or more embodiments of the present disclosure.

An avatar animation bitstream is received (502) from a transmitter. The bitstream comprises at least one avatar animation unit (AAU).

A header of the at least one avatar animation unit (AAU) is decoded (504).

From the header, it is determined (506) that the AAU is a silent AAU, a silent AAU indicating to the receiver that the transmitter is not sending any animation data but is still alive.

Responsive to the determining, a first syntax element indicating a number of ticks per second and a second syntax element indicating a duration of the silent AAU are decoded (508).

A target avatar may be rendered taking into account the first and second syntax elements, i.e., taking into account the fact that the sender is alive but not sending animation data. In such a situation the transmitter is thus aware not to close its connections with the transmitter. The transmitter may continue rendering the target avatar, e.g., the state of the avatar may return gradually to a neutral/initial state, so it does not freeze and thus look wrong.

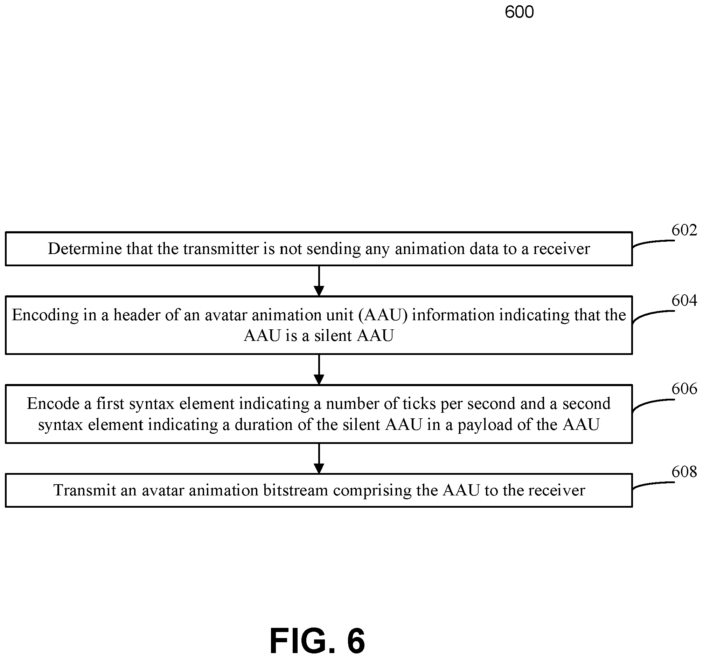

**FIG. 6** is a block diagram illustrating an example of a method (600), in a transmitter, according to one or more embodiments of the present disclosure.

The transmitter determines (602) that it is not sending any animation data to a receiver.

In a header of an avatar animation unit (AAU) information indicating that the AAU is a silent AAU is encoded (604).

A first syntax element indicating a number of ticks per second and a second syntax element indicating a duration of the silent AAU are encoded (606) in a payload of the AAU.

The transmitter is then transmitting (608) an avatar animation bitstream comprising the AAU to the receiver.

**FIG. 7** is a block diagram illustrating an example of an encoding method (e.g., a processing model) for an avatar animation unit using quantization and compression. The method uses quantization to code and compress the bitstream format. The quantization flag in one example can be fixed and normative with a defined default value for all the data parameters transmitted in the payload.

In a different embodiment, the quantization flag is transmitted and unique to all data parameters in the payload, which means all data in the payload is quantified to an integer value to the same number of bits e.g., quantization of 10 bits.

In yet another embodiment, the quantization flag is transmitted per keyframe and different for every data parameter transmitted in the payload, making the bitstream size variable depending on the type of data being transmitted in the payload.

FIG. 7 shows the encoding of an aau_header and an aau_payload function (S40). At S42, the header (aau_header) is checked to determine whether the aau is a keyframe aau or a non keyframe aau.

If the aau is not a keyframe, residual values in the aau_payload are computed (S44): $data ′ = {data}_{prev} - data$

Where "data" can be represented by any data floating value present in the "aau_payload" with a "aau_type" equals to "AAU_ANIMATION", "AAU_JOINT" or "AAU_LANDMARK" e.g., "amu_animation_target_weights[i]" that represent 32 bits of type float32, but not limited to.

The data of the previous frame *dataₚᵣₑᵥ* is subtracted from the current frame *data,* which results in applying quantization to the difference between two frames, wherein the previous frame is a keyframe.

If the aau is a keyframe, values are not modified: $data ′ = data$

Then, in all cases, values (residual or absolute) are quantized (S46) using aau_quantization defined in the aau header: ${data}_{q} = round \left(\frac{data ′}{1 ≪ QS}\right)$

The QS can be defined by any variable integer value e.g., QS = 5, or QS = 10 or any positive number.

The resulted *data_{q}* in one embodiment is used to define a number of bits for the data that needs to be compressed and transmitted.

Finally, a compression mechanism of integers (S48) is used, this can typically be entropy encoding, but not limited too.

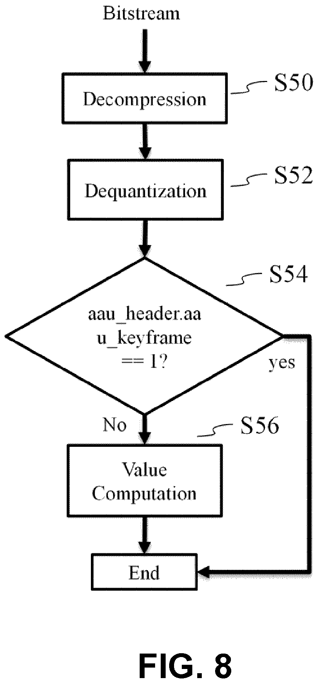

**FIG. 8** is a block diagram illustrating an example of a decoding method (e.g., a processing model) for an avatar animation unit reconstruction.

A decompression mechanism of integers is used (S50), consistent with the one used in the encoding stage (S48), e.g., using entropy decoding. The result is an aau_header and an aau_payload where floating values are quantized.

The floating values are reconstructed/dequantized (S52) using the aau_quantization defined in the aau header: $data ′ = \left(1≪QS\right) {data}_{q}$

If the aau is not a keyframe, absolute values in the aau_payload are computed (S56): $data = {data}_{prev} - data ′$

If the aau is a keyframe, values are not modified: $data = data ′$

An avatar may then be rendered once AAUs are reconstructed.

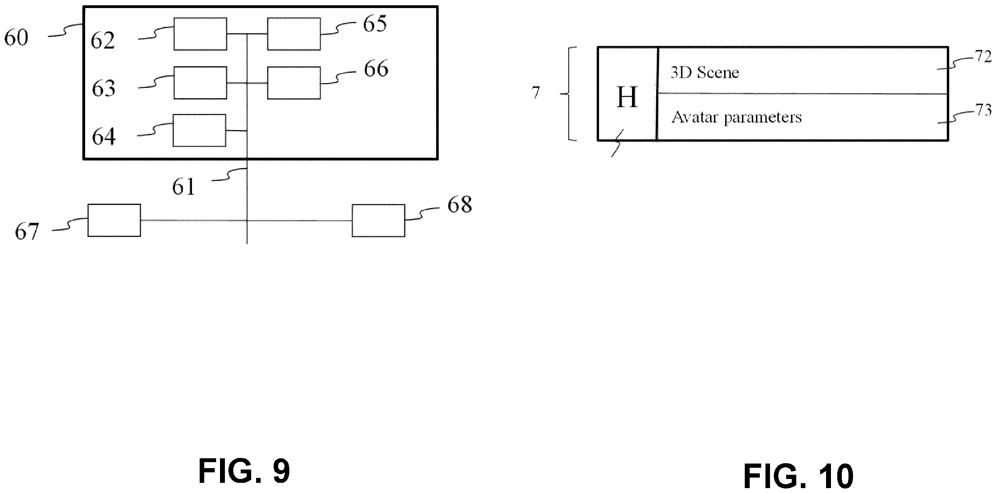

**FIG. 9** shows an example architecture of a device 60 which may be configured to implement methods according to embodiments of the present principles. The device is linked with other devices via their bus 61 and/or via I/O interface 66.

Device 60 comprises following elements that are linked together by a data and address bus 61:
- a processor 62 (or CPU), which is, for example, a DSP (or Digital Signal Processor);
- a ROM (or Read Only Memory) 63;
- a RAM (or Random Access Memory) 64;
- a storage interface 65;
- an I/O interface 66 for reception of data to transmit, from an application; and
- a power supply (not represented), e.g. a battery.

In accordance with an example, the power supply is external to the device. In each of mentioned memory, the word « register » used in the specification may correspond to area of small capacity (some bits) or to very large area (e.g. a whole program or large amount of received or decoded data). The ROM 63 comprises at least a program and parameters. The ROM 63 may store algorithms and instructions to perform techniques in accordance with present principles. When switched on, the CPU 62 uploads the program in the RAM and executes the corresponding instructions.

The RAM 64 comprises, in a register, the program executed by the CPU 62 and uploaded after switch-on of the device 60, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Device 60 is linked, for example via bus 61 to a set of sensors 67 and to a set of rendering devices 68. Sensors 67 may be, for example, cameras, microphones, temperature sensors, Inertial Measurement Units, GPS, hygrometry sensors, IR or UV light sensors or wind sensors. Rendering devices 68 may be, for example, displays, speakers, vibrators, heat, fan, etc.

In accordance with examples, the device 60 is configured to implement a method according to the present principles of managing a representation of the real environment of a user of an XR application, and belongs to a set comprising:
- a mobile device;
- a communication device;
- a game device;
- a tablet (or tablet computer);
- a laptop;
- a still picture camera;
- a video camera.

**FIG. 10** shows an example of an embodiment of the syntax of a stream when the data are transmitted over a packet-based transmission protocol. FIG. 10 shows an example structure 7 of a stream encoding point clouds according to the present principle. The structure consists in a container which organizes the stream in independent elements of syntax. The structure may comprise a header part 71 which is a set of data common to every syntax element of the stream. For example, the header part comprises some of metadata about syntax elements, describing the nature and the role of each of them. The structure comprises a payload comprising an element of syntax 72 and at least one element of syntax 73 (there may be an element of syntax 7 for each type of attribute data, for instance one for the color, one for the reflectance, one for the normal vectors, etc.). Syntax element 72 comprises data representative of the geometry of the point cloud, that is, for example, a series of bits representative of the 3D blocks, for example represented as a trisoup.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method, in a receiver, comprising:
receiving, from a transmitter, an avatar animation bitstream comprising at least one avatar animation unit (AAU) ;
decoding a header of the at least one avatar animation unit (AAU);
determining from the header that the AAU is a silent AAU, a silent AAU indicating to the receiver that the transmitter is not sending any animation data ;
responsive to the determining, decoding a first syntax element indicating a number of ticks per second and a second syntax element indicating a duration of the silent AAU; and
rendering a target avatar taking into account the first and second syntax elements.

2. A method, in a transmitter, comprising:
determining that the transmitter is not sending any animation data to a receiver ;
encoding in a header of an avatar animation unit (AAU) information indicating that the AAU is a silent AAU;
encoding a first syntax element indicating a number of ticks per second and a second syntax element indicating a duration of the silent AAU in a payload of the AAU; and
transmitting an avatar animation bitstream comprising the AAU to the receiver.

3. A receiver comprising one or more processors and at least one memory coupled to said one or more processors, wherein said one or more processors are configured to perform:
receiving, from a transmitter, an avatar animation bitstream comprising at least one avatar animation unit (AAU) ;
decoding a header of the at least one avatar animation unit (AAU);
determining from the header that the AAU is a silent AAU, a silent AAU indicating to the receiver that the transmitter is not sending any animation data ;
responsive to the determining, decoding a first syntax element indicating a number of ticks per second and a second syntax element indicating a duration of the silent AAU; and
rendering a target avatar taking into account the first and second syntax elements.

4. A transmitter comprising one or more processors and at least one memory coupled to said one or more processors, wherein said one or more processors are configured to perform:
determining that the transmitter is not sending any animation data to a receiver ;
encoding, in an avatar animation bitstream, in a header of an avatar animation unit (AAU) indicating that the AAU is a silent AAU;
encoding a first syntax element indicating a number of ticks per second and a second syntax element indicating a duration of the silent AAU in a payload of the AAU; and
transmitting an avatar animation bitstream comprising the AAU to the receiver.

5. A computer program comprising program code instructions for implementing the method according to any one of claims 1-2 when executed by a processor.

6. A computer readable storage medium having stored thereon instructions for implementing the method of any one of claims 1-2.

7. A signal comprising a header of an avatar animation unit (AAU) comprising information indicating that the AAU is a silent AAU and a payload comprising a first syntax element indicating a number of ticks per second and a second syntax element indicating a duration of the silent AAU, wherein the silent AAU indicates to a receiver of the signal that a transmitter of the signal is not sending any animation data.
